(19) **Europäisches Patentamt**

**European Patent Office**

**Office européen des brevets**

(11) **EP 1 362 003 B1**

(12) **EUROPEAN PATENT SPECIFICATION**

(45) Date of publication and mention
of the grant of the patent:
**19.04.2006 Bulletin 2006/16**

(51) Int Cl.:
*B66F 17/00* (2006.01)    *B66C 23/90* (2006.01)
*B66C 13/16* (2006.01)    *G01G 19/08* (2006.01)
*G01L 5/10* (2006.01)

(21) Application number: **02711091.5**

(22) Date of filing: **13.02.2002**

(86) International application number:
**PCT/GB2002/000660**

(87) International publication number:
**WO 2002/068310 (06.09.2002 Gazette 2002/36)**

(54) **A LOAD MONITORING SYSTEM FOR USE WITH A LOAD CONVEYOR**

BELASTUNGS-ÜBERWACHUNGSSYSTEM FÜR FÖRDERGUTTRÄGER

SYSTEME DE SURVEILLANCE DE CHARGE DESTINE A UN TRANSPORTEUR DE CHARGE

(84) Designated Contracting States:
**DE FR GB IT**

(30) Priority: **23.02.2001 GB 0104489**
**16.05.2001 GB 0111893**

(43) Date of publication of application:
**19.11.2003 Bulletin 2003/47**

(73) Proprietor: **RENOLD Plc**
**Wythenshawe**
**Manchester M22 5WL (GB)**

(72) Inventor: **CHRISTMAS, Michael, Charles**
**Chedle Hulme,**
**Cheshire SK8 6DE (GB)**

(74) Representative: **Every, David Aidan et al**
**MARKS & CLERK,**
**Sussex House,**
**83-85 Mosley Street**
**Manchester M2 3LG (GB)**

(56) References cited:
**EP-A- 0 351 453**     **EP-A- 0 467 643**
**EP-A- 0 795 514**     **US-A- 1 528 154**
**US-A- 4 078 668**     **US-A- 4 212 360**
**US-A- 4 511 974**     **US-A- 5 824 963**

- **PATENT ABSTRACTS OF JAPAN vol. 014, no. 418 (M-1022), 10 September 1990 (1990-09-10) & JP 02 163202 A (NIPPON YUSOKI CO LTD), 22 June 1990 (1990-06-22)**
- **PATENT ABSTRACTS OF JAPAN vol. 1995, no. 07, 31 August 1995 (1995-08-31) & JP 07 101681 A (SUMITOMO CONSTR MACH CO LTD), 18 April 1995 (1995-04-18)**
- **PATENT ABSTRACTS OF JAPAN vol. 1995, no. 10, 30 November 1995 (1995-11-30) & JP 07 172763 A (NKK CORP), 11 July 1995 (1995-07-11)**
- **"Chain Lift Fails on Cedar Point's Corkscrew" [Online] 31 August 1999 (1999-08-31) , ULTIMATE ROLLERCOASTER XP002213634 Retrieved from the Internet: <URL: http://www.ultimaterollercoaster.com/news/archives/august99/stories/083199_01.shtml> [retrieved on 2002-09-16] the whole document**
- **"Renold Theme Park Chain" 1998 , RENOLD POWER TRANSMISSION LIMITED XP002213635 page 2**

## Description

The present invention relates to an apparatus and a method for determining the relative loads on a plurality of load-bearing flexible elements of a mobile load handler according to the preamble of claims and 14 respectively.

In forklift trucks a lifting fork carriage on which a load may be disposed is raised or lowered by a mast assembly comprising at least one hydraulic jack having a sheave at its upper end. A lifting chain is trained around the sheave and connected at one end to the lifting fork carriage by an anchoring assembly and at the other end to a stationary structure on the truck. Usually two such chains and sheaves are provided at laterally spaced locations. When the hydraulic jack is extended the sheave (or sheaves) is (are) moved upwardly and the chain (or chains) is (are) extended in the vertical direction so as to raise the carriage and load. During use of the forklift truck the chain thus bears the load being lifted on the carriage and is therefore subjected to significant strain and wear. Any particular chain will have a maximum recommended load capacity for a given height of the carriage.

There is an increasing trend in industry for forklift trucks to be hired or rented rather than purchased. This means that servicing of the trucks becomes more significant for the owner. When a truck is returned after a hire period the owner has no knowledge of how that truck has been used and whether its recommended load capacity has been exceeded at any time. The absolute value of the loads and the load per unit time carried by the carriage affects the condition of the lifting chains and determines when the chain is likely to fail. At present a decision to replace a particular chain can only be based on the number of hours the truck has been out on hire or at least recording the time for which the truck is in use. These parameters bear no relation to the size of the load carried or the period for which the truck was engaged in carrying loads and therefore provide misleading information.

Forklift trucks or similar load carrying vehicles are often employed in warehouses, factories or similar environments for transferring materials between storage areas and incoming or outgoing delivery systems. In such environments it is usually the responsibility of the forklift truck operator or an attendant warehouse operator to identify the materials moved, the quantity moved and the locations between which they are moved. This system is susceptible to human error in the wrong identification of the materials, the quantity moved or the respective locations. Such errors may lead to incorrect storage or delivery of materials and/or erroneous inventory management resulting in loss of revenue as a result of, for example, inefficient use of time in locating misplaced materials, enforced delay through lack of materials stock etc.

US-A-4212360 discloses a load weighing system for a forklift truck. Cell transducers are used to measure the compressive forces exerted between a chain (which supports the fork carriage) and an anchorage point. The system provides an indication of the weight of the load being carried by the truck.

It is an object of the present invention to obviate or mitigate the aforesaid disadvantages.

According to the present invention there is provided an apparatus and a method for determining the relative loads on a plurality of load-bearing elongate flexible elements of a mobile load handler, comprising a plurality of elongate flexible elements and anchors therefor for attaching the elements to the handler, wherein there is provided a transducer attached to each element or anchor for generating an output representative of the load applied to a respective element, means for comparing the loads and means for generating an output signal indicative of unequal loading between the elements.

Specific embodiments of the present invention will now be described, by way of example only, with reference to the accompanying drawings in which:

Figure 1 shows a schematic side view of a forklift truck fitted with the load determining apparatus of the present invention, the truck shown carrying a load;

Figure 2 shows a schematic front view of a similar forklift truck to that of figure 1, the load having been removed for clarity;

Figure 3 shows a lifting chain of a forklift truck fitted with part of the apparatus of the present invention;

Figure 4 is a diagrammatic view illustrating the collection of information in accordance with the method of the present invention;

Figure 5 is a block circuit diagram illustrating an embodiment of how the collected information is processed;

Figure 6 is a schematic representation showing a warehouse having an inventory management system that is not the subject of the present invention; and

Figure 7 is an alternative embodiment of the present invention in which a chain anchor is fitted with a load transducer of the apparatus of the present invention.

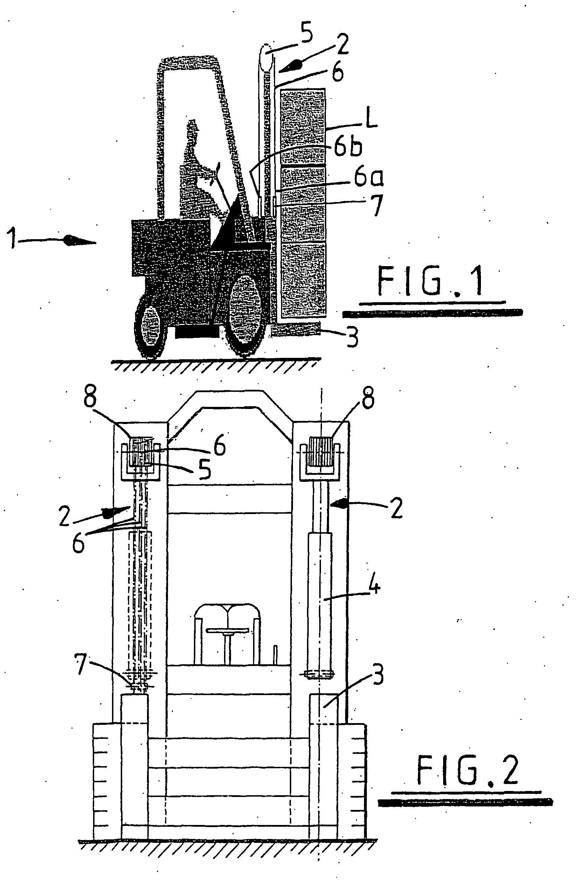

Referring now to figures 1 and 2 of the drawings, an exemplary load handling vehicle is shown in the form of a forklift truck 1. At the front of the truck there is a pair of laterally spaced, vertically extending mast assemblies 2 on which a forklift carriage 3 and the load L is raised or lowered with respect to the rest of the vehicle.

Each mast assembly 2 comprises a hydraulic cylinder jack 4 for raising and lowering the carriage 3. The jack 4 is connected at one end to the vehicle structure and at a second end to a sheave 5 and is supplied with pressurised hydraulic fluid via a flow line and pump (not shown) that are managed by a lifting jack control circuit (not shown). Associated with each mast assembly 2 are three parallel, laterally spaced lifting chains 6, each of which is trained over a respective sheave 5 (or pulley) at the upper end of the mast assembly 2 such that the two ends 6a, 6b of the chain hang downwardly. A first end 6a of each lifting chain 6 is connected to the forklift carriage 3 by an anchor assembly 7 (for clarity only one assembly is shown in figure 2) and the second end 6b is fixed to a stationary structure on the truck.

When the hydraulic jack 4 is extended the sheaves 5 are moved upwardly so that the chains 6 ride over them and are extended in a vertical direction so as to raise the carriage 3 via the anchor assembly 7.

Although this particular embodiment shows three parallel chains 6 on each side, any appropriate number may be used.

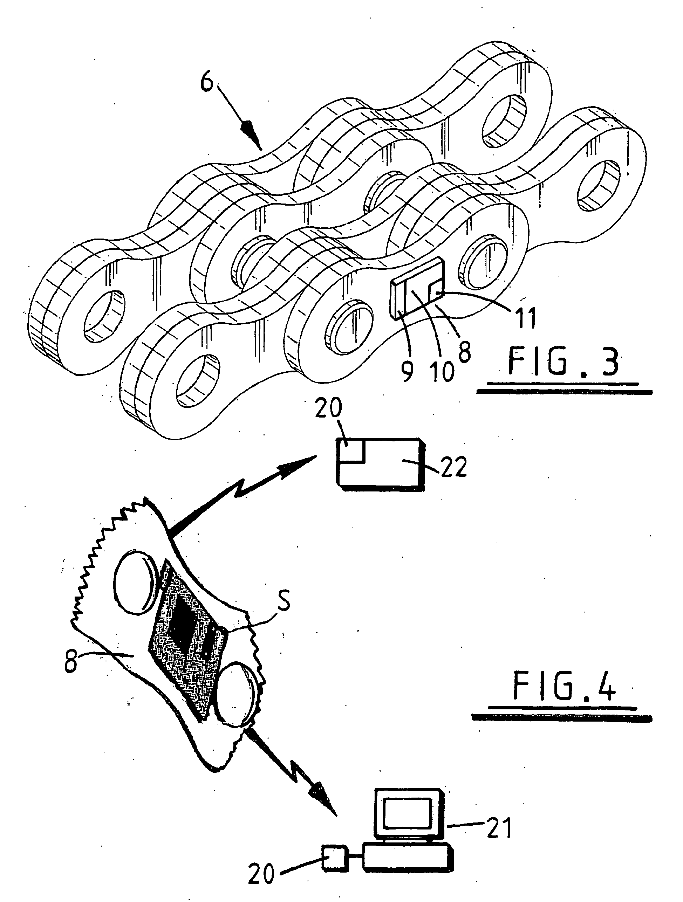

Referring now to figures 3 to 5, each of the chains 6 has a particular chain link 8 that is fitted with a sensor unit S comprising strain gauges and associated electrical circuitry 9, a data storage device 10 comprising at least a memory chip, a clock, and a transceiver 11. The output of the strain gauge circuit 9 is an analogue electrical signal that is proportional to the elongation of the chain link 8 as a result of loading. The signal is therefore indicative of the load applied to the chain 6 at any point in time. The output signal of the strain gauge circuit 9 is converted into digital data ready for storage and/or processing and is transmitted to the data storage device 10. If the sensor unit S is supplemented with a processor and appropriate software an amount of analysis of the data may be performed before it is then passed to the transceiver 11 for transmission to a remote transceiver 20 that is connected to a nearby computer 21 or a hand-held data capture unit 22. Alternatively, the data may be transmitted directly to the receiver without any analysis in the sensor unit S. The computer 21 may be in the form of a stand-alone PC with appropriate analysis software or may be a computer that is connected in a local or wide area network.

The forklift truck may optionally be fitted with additional means to detect and transmit other information to the processor. For example, a carriage height transducer 25 such as a linear potentiometer or one or more microswitches is positioned on a stationary part of the truck frame such that relative movement of the mast assembly can be monitored. This generates an output signal that is indicative of the vertical height of the carriage 3 (and therefore the load) relative to the rest of the mast assembly 2 of the truck. A bar code 26 reader is present on the front of the lifting carriage 3 or any other suitable position on the truck and is configured to read bar code information affixed to the load L that is being transported and bar code information disposed in physical proximity to the storage area from which or to which the load L is transported. The bar code on the load L carries unique identification code data relating to that load such as, for example, the part number, order number, or the mass of the individual items that make up the load.

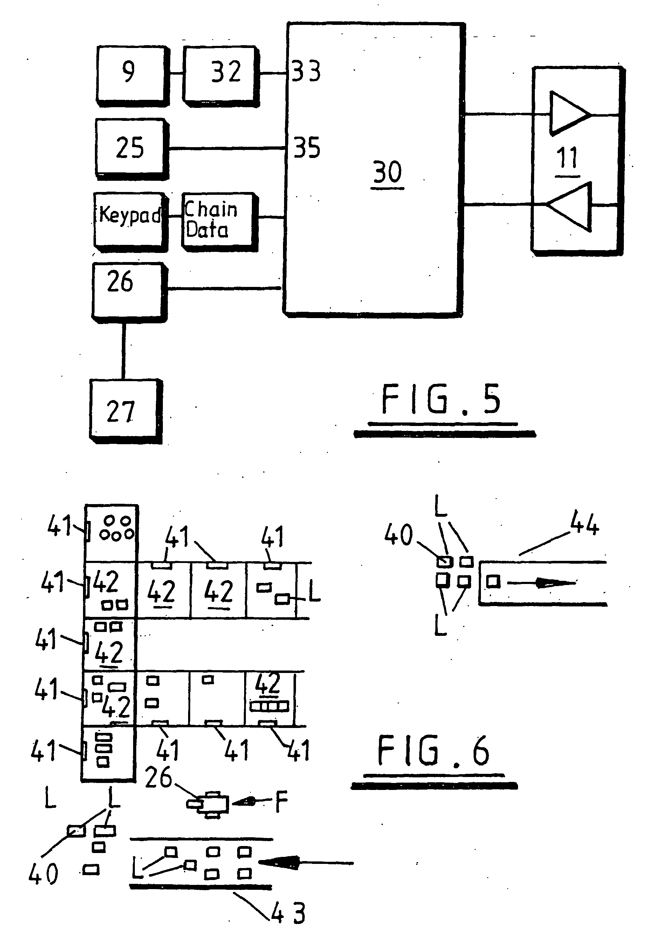

An embodiment in which a processing capability is present in the sensor unit S is illustrated in figure 5. The sensor unit S has the same components referred to above but is supplemented with a processor chip 30 and a receiver 31. The processor 30 is pre-loaded with data relating to the type of chain being analysed such as, for example, its type, length, certification and service history to date. This data may be pre-programmed into the processor 30 before the chain is fitted to the vehicle, may be entered with the sensor unit S and chain in-situ by means of a keypad temporarily connected to the sensor unit or may be entered remotely and transmitted from the transceiver 20 of the computer 21 or the hand-held data capture unit 22 to the sensor unit transceiver 11. When the vehicle is used, the analogue output signal of the strain gauge circuit 9 is converted into digital data by an analogue to digital converter 32 and is passed to a data input port 33 of processor 30 along with a clock signal 34. Similarly the output signal of the carriage height transducer 25 is converted into digital data and is passed to another data input port 35 of the processor 30. The data scanned in from the bar code reader 26 is transmitted directly to the processor 30. The bar code reader 26 is connected to the audio signal generator 27 that is mounted on the truck near the driving position and generates a signal that instructs the signal generator 27 to emit an audio feedback signal to the truck driver when the bar code is read successfully.

In the embodiment of figure 5 the processor performs some analysis on the stored data without the need to download it first. The processed or semi-processed data is downloaded in the manner described above. Downloading of the data may be achieved by using a wire connection or by wireless transmission. (e.g. infra-red or radio-wave). Once the data is downloaded, software can be used to process and analyse the information in a number of ways to assess the chain condition and to determine whether the chain needs servicing or replacing.

The data can be analysed, for example, to determine the average number of hours that the chain has been used in a particular range of load magnitudes. This information is more meaningful and useful to a truck manufacturer, owner or lessor than a simple indication of how long the truck has been used. This is because for a significant proportion of the time in service the truck is usually not carrying any load.

The data can be analysed to determine the number of times the load has exceeded a predetermined threshold for a given carriage height and/or the absolute value of those loads. This enables the lessor to determine how many times the recommended chain load has been exceeded and the impact this has on the risk of chain failure. Moreover, the lessor is able to determine whether the truck has been used to carry loads in excess of an agreed limit and therefore whether the terms of the lease have been broken. In that event the lessee of the truck may be liable for any damage to the truck. '

The service conditions of the chain can be analysed, for example, by applying Miner's Rule to the data collected so as to predict the remaining life span of the chain. This analysis involves the calculation of the fractional contribution to fatigue damage at each load level (and therefore stress level) in the load spectrum.

If $n_1$ is the number of load cycles at load magnitude $S_1$ and the expected life span of the chain (when new) is $N_1$ cycles, the fractional contribution to chain fatigue damage at load $S_1$ is $n_1/N_1$. For any number of different load levels, expected failure is when all the fractional contributions add up to unity i.e. when:

$$n_1/N_1 + n_2/N_2 + n_3/N_3 + \ldots\ldots n_x/N_x = 1$$

where x is the number of different load levels.

When a factor of design safety is incorporated into the calculations, the chain should be replaced when, for example, the cumulative value of n/N = 0.6.

This information is invaluable to a forklift truck manufacturer, owner or lessor. In the case of a lessor, the information can be downloaded when the truck is returned after the hire period. In an alternative embodiment of the invention, the work conditions of the chains are monitored remotely during the use of the truck by means of a computer connected to a local or wide area network. The data stored in the memory of the sensor unit processor 30 fixed to the chain is transmitted at periodic intervals to the transceiver 20 that is connected into the computer network. The data is analysed by a software routine running on the computer network so as to generate meaningful results. As described above at least some of the analysis or calculations may be performed in a processor 30 that forms part of the sensor unit S attached to the chain (as described above). Alternatively the stored data may be downloaded at periodic intervals to a hand-held data capture device 22 containing the necessary memory, processing capacity and software programs to analyse the data and a display to convey the information to the user. The device may receive the data by wireless communication as before. If necessary the hand-held unit 22 may be plugged into a computer system for further analysis of the data.

If the data is processed in real time or at least after a relatively small time delay and it is determined that the chain fatigue life expectancy has been exceeded then an appropriate signal may be generated by the processor 30. This signal may be used to drive an audio or visual alarm to the truck driver or may control a cut-out circuit that is used disable the drive of the vehicle. Alternatively, the processing routine may calculate a threshold load magnitude for each height at which the carriage 3 may be disposed. Thus, when the sensor unit S detects that a load L of a particular magnitude is being handled by the carriage 2, the carriage height measurement data is compared to a threshold value for that load and if the threshold is exceeded or equalled a disable signal is sent by the processor 30 to the lifting jack control circuit so as to lower the height of the carriage 2 by retracting the jacks 4 or to disable further extension of the jacks 4.

A comparison of the proportion of the total load L carried by each chain stand 6 can be performed to identify whether the tension in any of the chains requires adjustment. If the data indicates that one of the chains is carrying too much or too little of the load then it is clear that tension adjustment is required. In one particular embodiment each chain has a sensor unit S of the kind described above with reference to figures 3 to 5 including a data storage device 10 and a transceiver 11. At least one of the units S has a processor 30. The output data from the strain gauge circuit 9 in each sensor unit S is representative of the load carried by each chain and is exchanged by the transceivers 11 of the sensor units S so that a real time comparison of the load carried by each chain 6 can be made by the processor 30. If this comparison shows a discrepancy between the chain tensions above a certain predetermined value an output signal is generated by the processor 30 to indicate that the tension of a particular chain requires adjustment.

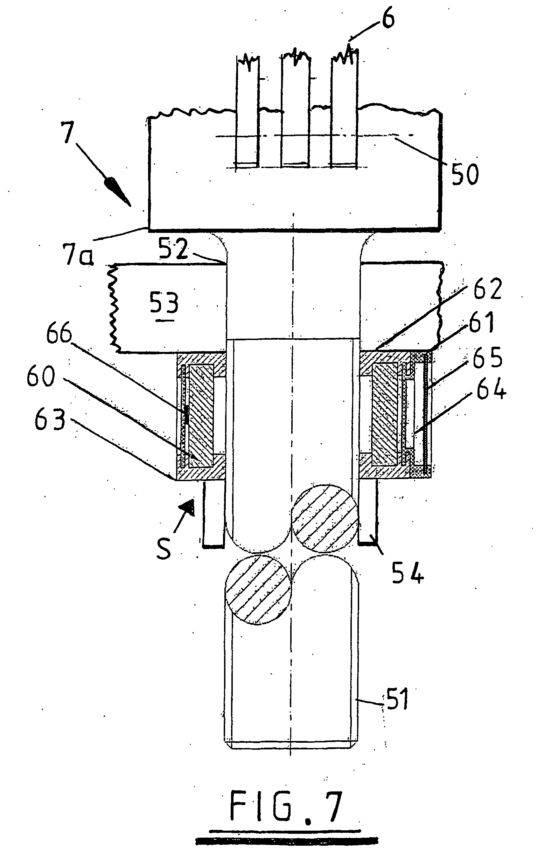

Referring now to figure 6, in applications where the forklift truck F is to be used in a warehousing operation the bar code reader 26 (or other data reader) on the truck is used to read the bar code data (or other data) applied to the loads. A first bar code 40 is affixed to each load L or to a pallet on which that load is supported. A second bar code 41 is affixed to each storage location 42 in the warehouse. When a load at an incoming goods section 43 of the warehouse is collected by the truck, the first bar code 40 associated with the load L is read and the data is transmitted to the processor 30 (whether local or remote). The audible or visual signal is generated by the audio signal generator 27 so as to indicate to the truck operator that the bar code has been successfully read. The data carried by the first bar code 40 may be coded information such as the load type, the mass of each individual part making up the load, part number and order number. A memory associated with the processor 30 is pre-programmed with a look-up table containing the weight of each individual item that might be stored in the warehouse. Once the bar code data is received by the processor 30 it can be processed and stored in an appropriate memory location so as to provide a record of the load being handled. When the load L is being transported the load sensor unit S measures the magnitude of the load in the manner described above and the data is passed to the processor 30 which uses the look-up table to identify the weight per item of the load type that has been read from the bar code. The processor 30 then calculates the number of items making up that load from the measured load magnitude and this value is stored. The truck transports the load L to an appropriate storage location 42 of the warehouse where it is unloaded. The bar code reader 26 is used as before to scan in the second bar code 41 associated with the storage location 42 where the load L has been stored and the data is again passed to the processor 30 for processing and is stored in an appropriate memory location to provide a record of the storage location of the load L. Similarly the same operation is used when a load is collected by the truck from a storage location 42 and distributed to an appropriate outgoing goods section 44 of the warehouse or to an alternative storage location 42. The collected information is used as part of an inventory record to monitor the movement of stock by the forklift truck. The processed data in the memory location is transmitted via a local or wide area network to a central mainframe database of a company concerned whereupon the information may be collated with similar information received from other warehouses. The collected information is then used in the management of stock control and purchasing.

In an alternative embodiment of the load monitoring system, the sensor unit S is disposed in the anchor assembly 7. An example embodiment is shown in figure 7 in which a single sensor unit S is shown attached to an anchor assembly 7 of the chains 6. The final links of the chains 6 are connected to an anchor member 7a by means of a transverse pin 50. The anchor member 7a terminates in a generally cylindrical threaded end 51 that passes through an aperture 52 in a substantially horizontal web 53 integral to the lifting carriage 3. The threaded end 51 of the anchor member 7a is secured in place by means of a nut 54 that is threadedly engaged thereto. In a conventional anchor assembly the nut 54 bears against the horizontal web 53 and prevents the anchor member passing through the aperture 52. However, in the present design the sensor unit S is disposed between the nut 54 and the web 53. In the embodiment illustrated the sensor unit S comprises a load ring 60 that is disposed coaxially with the threaded end of the anchor member 7a and is retained in a plastics housing 61 with steel top and bottom end caps 62, 63. One side of the housing 61 is configured to define a recess 64 in which the data storage device 10 and a battery (not shown) are to be located. A cover plate 65 seals the recess 64 from the surrounding environment. The load ring 60 is fitted with a strain gauge 66 that is connected by wire to the data storage device 10. When the chain is under load the threaded end 51 of the anchor member 7a is pulled upwardly towards the web 53. This action serves to compress the load ring 60 and end caps 62, 63 between the web and the nut 54. When operational the strain gauge 66 serves to generate a signal representative of the degree of compression of the load ring 60 and therefore of the magnitude of the load L carried by the truck.

It will be appreciated that numerous modifications to the above described design may be made without departing from the scope of the invention as defined in the appended claims. For example, any appropriate form of load or pressure sensing transducer may be used as an alternative to a strain gauge.

It is to be understood that the load monitoring system of the present invention has application to any type of load handling device in which a chain or other load bearing elongate flexible element is used (e.g. a belt or a cable) as part of a load conveying mechanism. In addition, the system has application in other environments where a chain (or other elongate load-bearing flexible element) is used as part of a load conveyor mechanism. For example, the system may be used with a chain drive of a roller-coaster ride in which passenger carriages are conveyed uphill by a chain drive. The sensor unit is applied the chain and the collected data is used as before to predict the remaining fatigue life of the chain.

**Claims**

1.   Apparatus for determining the relative loads on a plurality of load-bearing elongate flexible elements (6) of a mobile load handler (1), comprising a plurality of elongate flexible elements (6) and anchors (7) therefor for attaching the elements to the handler; a transducer (S) being attached to each element or anchor for generating an output representative of the load (L) applied to a respective element (6), **characterised by** means (30) for comparing the loads and means (30) for generating an output signal indicative of unequal loading between the elements.

2.   Apparatus according to claim 1, further comprising means (5, 30) for calculating the absolute value of the load at a particular point in time.

3.   Apparatus according to claim 1 or 2, further comprising means (30) for calculating the number of load cycles over a predetermined load value.

4.   Apparatus according to any one of claims 1 to 3, further comprising means (30) for reading encoded data applied to the loads, such data including information such as load identification and the number of items in a particular load.

5.   Apparatus according to any one of claims 1 to 4, further comprising means (30) for calculating the cumulative fatigue damage to the chain.

6.   Apparatus according to any one of claims 1 to 5, further comprising a data collection device (10, 21, 22), the output of the transducer (S) being transmissible thereto,

7. Apparatus according to claim 6, wherein the data collection device (21, 22) is disposed at a position remote from the transducer (S).

8. Apparatus according to claim 7, wherein the data collection device is designed to be hand-held (22).

9. Apparatus according to claims 6, 7 or 8, wherein the data collection (10, 21, 22) device includes a processor for analysing the data received.

10. Apparatus according to any one of claims 6 to 9, wherein the transmission of data from the transducer (S) to the data collection device (10, 21, 22) is by wireless communication.

11. Apparatus according to any one of claims 6 to 10, wherein the data collection device (10, 21, 22) is connectable to a computer network to allow remote access to the information contained therein.

12. Apparatus according to any one of claims 6 to 11, wherein the elongate flexible elements (6) are chains.

13. Apparatus according to claim 12, wherein the mobile load handler (1) is a forklift truck.

14. A method for determining the relative loads on a plurality of load-bearing elongate flexible elements of a mobile load handler, the elements having anchors for attaching them to the load handler and a transducer attached to each element or anchor for generating a signal representative of the load applied to a respective element, **characterised in that** the method comprises the steps of comparing the load value represented by said signals and generating an output signal indicative of the unequal loading between the chains.

**Patentansprüche**

1. Vorrichtung zum Bestimmen der relativen Belastungen auf mehreren tragenden länglichen flexiblen Elementen (6) eines mobilen Lastenförderers (1), die mehrere längliche flexible Elemente (6) und Anker (7) für dieselben umfaßt, um die Elemente an dem Förderer zu befestigen, **dadurch gekennzeichnet, daß** ein an jedem Element oder Anker befestigter Wandler (S), um eine Ausgabe zu erzeugen, welche die auf ein entsprechendes Element (6) ausgeübte Belastung (L) repräsentiert, Mittel (30) zum Vergleichen der Belastungen und Mittel (30) zum Erzeugen eines Ausgabesignals, das eine ungleiche Belastung zwischen den Elementen anzeigt, bereitgestellt werden.

2. Vorrichtung nach Anspruch 1 die ferner Mittel (5, 30) zum Berechnen des absoluten Werts der Belastung zu einem bestimmten Zeitpunkt umfaßt.

3. Vorrichtung nach Anspruch 1 oder 2, die ferner Mittel (30) zum Berechnen der Zahl von Belastungszyklen über einem vorher festgelegten Belastungswert umfaßt.

4. Vorrichtung nach einem der Ansprüche 1 bis 3, die ferner Mittel (30) zum Lesen von an den Lasten angebrachten codierten Daten umfaßt, wobei solche Daten Informationen, wie beispielsweise eine Lastenidentifikation und die Zahl von Artikeln, in einer bestimmten Last, einschließen.

5. Vorrichtung nach einem der Ansprüche 1 bis 4, die ferner Mittel (30) zum Berechnen des kumulativen Ermüdungsschadens an der Kette umfaßt.

6. Vorrichtung nach einem der Ansprüche 1 bis 5, die ferner ein Datenerfassungsgerät (10, 21, 22) umfaßt, wobei die Ausgabe des Wandlers (S) zu demselben übertragen werden kann.

7. Vorrichtung nach Anspruch 6, wobei das Datenerfassungsgerät (21, 22) an einer von dem Wandler (S) entfernten Position angeordnet ist.

8. Vorrichtung nach Anspruch 7, wobei das Datenerfassungsgerät dafür ausgelegt ist, in der Hand gehalten zu werden (22).

9. Vorrichtung nach Anspruch 6, 7 oder 8, wobei das Datenerfassungsgerät (10, 21, 22) einen Prozessor zum Analysieren der empfangenen Daten einschließt.

**10.** Vorrichtung nach einem der Ansprüche 6 bis 9, wobei die Datenübertragung von dem Wandler (S) zu dem Datenerfassungsgerät (10, 21, 22) durch drahtlose Kommunikation erfolgt.

**11.** Vorrichtung nach einem der Ansprüche 6 bis 10, wobei das Datenerfassungsgerät (10, 21, 22) mit einem Rechnernetz verbunden werden kann, um einen Fernzugriff auf die darin enthaltenen Informationen zu ermöglichen.

**12.** Vorrichtung nach einem der Ansprüche 6 bis 11, wobei die länglichen flexiblen Elemente (6) Ketten sind.

**13.** Vorrichtung nach Anspruch 12, wobei der mobile Lastenförderer (1) ein. Gabelstapler ist.

**14.** Verfahren zum Bestimmen der relativen Belastungen auf mehreren tragenden länglichen flexiblen Elementen eines mobilen Lastenförderers, wobei die Elemente Anker, um sie an dem Lastenforderer zu befestigen, und einen an jedem Element oder Anker befestigten Wandler, um ein Signal zu erzeugen, das die auf ein entsprechendes Element ausgeübte Belastung repräsentiert, haben, **dadurch gekennzeichnet, daß** das Verfahren den Schritt umfaßt, den durch die Signale repräsentierten Belastungswert zu vergleichen und ein Ausgabesignal zu erzeugen, das die ungleiche Belastung zwischen den Ketten anzeigt.

**Revendications**

**1.** Dispositif servant à déterminer les charges relatives sur plusieurs éléments de support de charge allongés flexibles (6) d'un dispositif de manutention de charges mobile (1), comprenant plusieurs éléments allongés flexibles (6) et des éléments d'ancrage (7) correspondants, pour fixer les éléments sur le dispositif de manutention, **caractérisé en ce qu'**un transducteur (S) est fixé sur chaque élément ou élément d'ancrage pour émettre un signal de sortie représentatif de la charge (L) appliquée à un élément respectif (6), un moyen (30) servant à comparer les charges et un moyen (30) destiné à émettre un signal de sortie indicatif d'un chargement inégal entre les éléments.

**2.** Dispositif selon la revendication 1, comprenant en outre un moyen (5, 30) pour calculer la valeur absolue de la charge à un moment particulier.

**3.** Dispositif selon les revendications 1 ou 2, comprenant en outre un moyen (30) pour calculer le nombre de cycles de charge au-dessus d'une valeur de charge prédéterminée

**4.** Dispositif selon l'une quelconque des revendications 1 à 3, comprenant en outre un moyen (30) pour lire les données codées appliquées aux charges, ces données englobant des informations telles que l'identification de la charge et le nombre d'articles dans une charge particulière.

**5.** Dispositif selon l'une quelconque des revendications 1 à 4, comprenant en outre un moyen (30) pour calculer l'endommagement par fatigue cumulatif de la chaîne.

**6.** Dispositif selon l'une quelconque des revendications 1 à 5, comprenant en outre un dispositif de collecte de données (10, 21, 22), le signal de sortie du transducteur (S) pouvant être transmis vers celui-ci.

**7.** Dispositif selon la revendication 6, dans lequel le dispositif de collecte des données (21, 22) est agencé au niveau d'une position éloignée du transducteur (S).

**8.** Dispositif selon la revendication 7, dans lequel le dispositif de collecte de données est destiné à être porté à la main (22).

**9.** Dispositif selon les revendications 6, 7 ou 8, dans lequel le dispositif de collecte des données (10,21,22) englobe un processeur pour analyser les données reçues.

**10.** Dispositif selon l'une quelconque des revendications 6 à 9, dans lequel la transmission des données du transducteur (S) vers le dispositif de collecte de données (10, 21, 22) est assurée par communication sans fil.

**11.** Dispositif selon l'une quelconque des revendications 6 à 10, dans lequel le dispositif de collecte des données (10, 21, 22) peut être connecté à un réseau d'ordinateur pour permettre un accès à distance aux informations qui y sont contenues.

**12.** Dispositif selon l'une quelconque des revendications 6 à 11, dans lequel les éléments allonges flexibles (6) sont constitués par des chaînes.

**13.** Dispositif selon la revendication 12, dans lequel le dispositif de manutention de charges mobile (1) est constitué par un chariot élévateur à fourche,

**14.** Procédé de détermination des charges relatives sur plusieurs éléments de support de charge allongés flexibles d'un dispositif de manutention de charges mobile, les éléments comportant des éléments d'ancrage pour les fixer au dispositif de manutention des charges, un transducteur étant fixé à chaque élément ou élément d'ancrage pour émettre un signal représentatif de la charge appliquée à un élément respectif, **caractérisé en ce que** le procédé comprend les étapes de comparaison de la valeur de la charge représentée par lesdits signaux et d'émission d'un signal de sortie indicatif du chargement inégal entre les chaînes.

5
2
6

1

L

6b

6a

7

FIG.1

3

8
8

6
5

2
2
6

4

7

3

FIG.2

FIG.3

FIG.4

| 9 | — | 32 | — 33 | | 30 | | 11 |
| 25 | | | — 35 | | | | |
| Keypad | Chain Data | | | | | | |
| 26 | | | | | | | |
| 27 | | | | | | | |

## FIG.5

## FIG.6

FIG.7